# EUROPEAN PATENT APPLICATION

(11) **EP 0 598 384 A1**
(43) Date of publication of application: **25.05.1994**
(21) Application number: 93118495.6
(22) Date of filing: 16.11.1993
(51) Int. Cl.: C01B 21/04

(54) **Oxygen removal from partially purified nitrogen**

(30) Priority: 17.11.1992 US 977465
(71) Applicant: PRAXAIR TECHNOLOGY, INC., Danbury, CT 06810-5113 (US)
(72) Inventor: de Wilde, Robert Marcel, St. Niklaas (BE)
(74) Representative: Schwan, Gerhard, Dipl.-Ing.

(57) **Abstract**

The residual oxygen in a partially purified nitrogen stream, as from a membrane or PSA unit, is reacted with a hydrocarbon to provide a protective gas atmosphere of nitrogen, carbon monoxide and hydrogen, either in an externally heated reactor or within the furnace in which the protective gas atmosphere is to be employed.

## Description

Field of the Invention - The invention relates to the production of nitrogen. More particularly, it relates to the production of nitrogen-containing stream by the conversion of residual oxygen to useful chemical compounds.
Description of the Prior Art - The production of high purity nitrogen has, for many years, been carried out employing state-of-the-art air separation technology based on cryogenic distillation techniques. Because of the favorable economics of scale up for such cryogenic distillation, large tonnage nitrogen users are supplied with nitrogen gas piped from a cryogenic plant installed on the users' site. Smaller tonnage users, i.e., 2-30 tons/day or less, are typically supplied with liquid nitrogen trucked to the user's site from a centrally located liquid nitrogen production plant. The cost of liquefying nitrogen gas and of transporting liquid nitrogen from an off-site cryogenic plant to the user's site will be seen to add significantly to the cost of the nitrogen as supplied to the user.

In recent years, therefore, a major challenge in the art has been to develop small tonnage air separation plants that can effectively produce low cost nitrogen gas at the user's site. Recent developments relating to pressure swing adsorption (PSA) and membrane technologies have served to significantly lower the cost of on-site systems for the production of relatively low purity, small tonnage nitrogen. On the other hand, high purity nitrogen cannot be economically produced by such PSA or membrane systems because of practical limitations rendering the power requirements and the cost of such systems prohibitive.

There is a desire in the art for the development of membrane or PSA systems and approaches capable of reducing the cost of on-site, high purity nitrogen. One approach that has been employed to reduce the cost of said on-site, high purity nitrogen involves the use of a membrane or PSA system coupled with a trace oxygen removal system for final purification of the nitrogen product. In this approach, a membrane or PSA system is used for initial air separation to produce nitrogen at up to 3,000 ppm of oxygen, or higher, with a catalyst system then being used to remove additional oxygen to produce a purified nitrogen product stream having a residual oxygen content of 10 ppm or less. While this approach enables high purity nitrogen to be produced on-site at a lower cost than by membrane or PSA systems alone, the cost of saving achieved thereby nevertheless represents a marginal improvement over that associated with the supply of liquid nitrogen by truck to the user's site. This is primarily due to the relatively high cost of the hydrogen used to react with the oxygen present in the partially purified nitrogen stream for removal thereof. This approach could be of more practical commercial significance as compared to the trucking of liquid nitrogen, however, if a low-cost hydrogen supply source were available at the users' site and if the utilization of such hydrogen were to be enhanced.

There are presently a number of industrial applications, particularly in the petrochemical industry, which require high purity nitrogen and that also have low-cost hydrogen available on site. Frequently, however, this low cost, available hydrogen is impure and contains various hydrocarbons. The use of such impure hydrogen would be disadvantageous with respect to the operation of a catalyst system for final nitrogen purification. If such impure hydrogen were to be purified at relatively low cost, and the resulting high purity hydrogen used in an efficient and effective manner in said catalyst system for final, on-site nitrogen purification, the use of membranes and PSA systems for such applications would be enhanced.

The inherent simplicity of permeable membrane systems provides a strong incentive and desire in the art for the development of such systems and related processes for the on-site production of high purity nitrogen. Those skilled in the art will also appreciate that there are particular overall processing operations for which an on-site PSA system is more appropriate than a membrane systems. The desire in the art of improved overall membrane and PSA systems for on-site, high purity nitrogen production has resulted in approaches utilizing a catalyst system for final nitrogen production, together with means for effectively utilizing the low-cost, impure hydrogen frequently available at the users' site in the production of high purity nitrogen in a commercially feasible and efficient manner.

In an approach described in the Campbell patent, U.S. 4,960,579, partially purified nitrogen recovered from an on-site membrane or PSA system is passed to a catalytic combustion system for final purification by reaction of the oxygen content thereof with a purified hydrogen stream. A separate membrane or PSA system is used to recover such a purified hydrogen stream from low cost, impure hydrogen available at the user's site. Such use of the separate systems and processes in an integrated manner enables the cost of producing high purity nitrogen to be significantly reduced, enhancing the feasibility of producing on-site, high purity nitrogen.

There are applications, however, for which hydrogen is not available, or where the use of hydrogen is not desired. In addition, it will be appreciated that, by reacting residual oxygen with hydrogen to form water, the total gas stream decreases, and this result may be undesirable in some applications.

In heat treatment applications, protective atmospheres consisting of nitrogen, hydrogen and carbon monoxide are commonly employed. It is known in the art to convert air to a mixture of nitrogen, hydrogen and carbon monoxide by reacting feed air with a hydrocarbon. The reaction is carried out in a catalytic reactor, commonly referred to as a generator, which is filled with a catalyst and is externally heated. In some instances, the generator containing the catalyst is located in the furnace in which the mixture is to be used. However, because of the high oxygen content of air (i.e. 21%), the reaction in the generator leads to the formation of unwanted products, such as carbon. This phenomenon, known as soot formation, results in such installations being maintenance-intensive in nature. Thus, the generator needs to be burned out periodically in order to assure the continued satisfactory functioning of the catalyst. Where pure nitrogen can be conveniently supplied, the desired protective atmosphere can be produced by direct injection into the furnace of pure nitrogen and a reducing compound, such as hydrogen, a hydrocarbon or an alcohol.

It is desirable in the art to obtain a protective atmosphere, for use in heat treatment and other applications, without the maintenance-intensive nature of the generator installation referred to above. Likewise, it is desired that, for such purposes, reliance on the use of hydrogen to produce a high purity nitrogen steam, with consequent decrease in total gas stream flow, be avoided.

It is an object of the invention, therefore, to provide an improved process and system for the production of desired gas atmospheres.

It is another object of the invention to provide a process and system for the production of a desired gas atmosphere from partially purified nitrogen without undesired decrease in gas flow.

With these and other objects in mind, the invention is hereinafter described in detail, the novel features thereof being particularly pointed out in the appended claims.

### Summary of the Invention

The residual oxygen in partially purified nitrogen is converted to chemical compounds useful for application purposes, in a non-maintenance-intensive catalytic reactor using a hydrocarbon reactant in place of hydrogen, without decrease in total gas flow.

### Brief Description of the Drawing

The invention is hereinafter described in detail with reference to the accompanying drawings in which:
Fig. 1 is a schematic side elevational view of the positioning of a gas-producing catalytic reactor in a furnace; and
Fig. 2 is a schematic side elevational view of a catalytic reactor of the invention.

### Detailed Description of the Invention

The objects of the invention are accomplished by converting the residual oxygen present in nitrogen stream, e.g., initially purified nitrogen from a membrane or PSA unit, or an oxygen-containing recycle or other nitrogen processing stream from any other source, to hydrogen and carbon monoxide in a heated catalytic reactor, using a hydrocarbon for reaction with said residual oxygen. The reaction products are useful, and no decrease in gas flow occurs. The reactor is not maintenance-intensive, as in prior art installations, as excess oxygen is avoided, obviating the problem of undesired soot formation.

In the practice of the invention, the residual oxygen contained in the partially purified nitrogen produced in a membrane unit or a PSA unit, or an oxygen-containing nitrogen stream available from any other source, is reacted with a hydrocarbon, such as methane, to form carbon monoxide and hydrogen. For this purpose, the partially purified nitrogen is fed into the catalytic reactor, in a controlled manner, e.g., by measuring the total flow and the oxygen content of the nitrogen stream. The hydrocarbon reducing compound, such as methane, ethane and the like, is also passed into the catalytic reactor in a controlled manner to obtain an oxygen/hydrocarbon ratio such as to allow only the oxidation of the hydrocarbon to carbon monoxide and hydrocarbon. As a result, a nitrogen, carbon monoxide and hydrogen stream is obtained with essentially no residual oxygen content.

If a partially purified nitrogen stream from a membrane unit contained 98% nitrogen and 2% oxygen with a flow rate of 100 m³/hr., methane could be used to convert the oxygen content thereof in accordance with the following reaction:

CH₄+ 1/2 O₂ → CO + 2H₂

The oxygen/methane ratio for the desired conversion of the residual oxygen would thus be 1/2, and 2m³/hr. of oxygen would require 4m³/hr. of methane for this reaction to occur.

It is within the scope of the invention to regulate or control the feed forward to the generator, as indicated above, or a feed backward regulation can be used, i.e., by regulating the hydrocarbon flow by analyzing the oxygen and carbon dioxide content in the outflowing gas stream. In addition, a combination of such feed forward and feed backward regulation approaches can be employed.

In the practice of the invention, the reactor is filled with a suitable catalyst and externally heated to obtain the desired reaction temperature. Reactor heating can be accomplished either by use of an external heating source or by using heat that is available in the furnace, e.g., a heat treatment furnace, in which the gas mixture to be formed will be employed. In external heating applications, the reactor will be a self standing unit that can be installed near the air separation membrane unit in which partially purified nitrogen is obtained. In embodiments in which the heat generated in the furnace is employed, it will be understood that the reactor will typically be installed inside the furnace. If desired, a combination of both forms of heating can be employed. Thus, the reactor can be installed in the furnace to receive heat therefrom, while additional heating is provided inside but not in direct contact with the space in which the conversion of oxygen takes place. In a furnace heated by radiation tubes, the reactor can easily be installed in the furnace by removing one of the radiant tubes, preferably in the soaking zone of the furnace, and replacing it by the catalyst-containing reactor used in the practice of the invention. In such circumstances, the resulting gas mixture produced in the reactor enters directly into the furnace upon leaving the reactor.

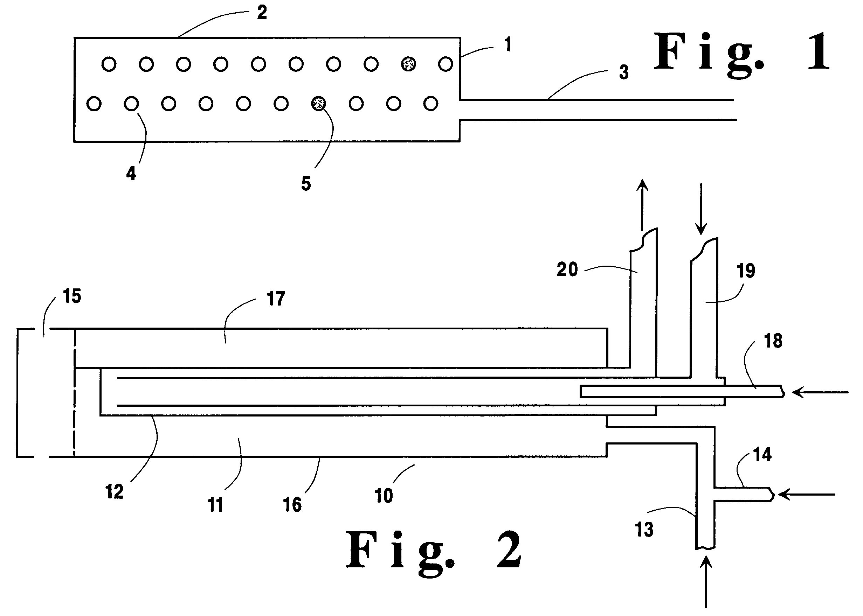

Fig. 1 of the drawing shows a continuous roller hearth furnace 1 consisting mainly of heating zone 2 and cooling zone 3. In said heating zone 2, the energy needed to heat up the charge is supplied by combustion of a fuel with air in radiant tubes 4. At one or several places in the furnace, radiant tubes 4 are replaced by catalytic reactors 5, which are heated by the heat generated in the furnace.

The catalytic reactor used in the practice of the invention is generally as illustrated in Fig. 2 of the drawing. The catalytic reactor, represented by the numeral 10, comprises two concentric spaces, i.e., outer space 11 and inner space 12. Outer space 11 is filled with catalyst and forms the reactor into which membrane nitrogen is fed from line 13 and hydrocarbon as is fed through line 14. The reaction products formed pass from the reactor through openings 15 in outer tube 16 that encloses outer space 11 and are introduced into the furnace as a desirable protective atmosphere without the flow decrease that occurs when hydrogen, rather than a hydrocarbon, is used as a reducing material for reaction with the residual oxygen in the partially purified membrane nitrogen. Inner space 12 is a combustion chamber having, in the illustrated embodiment, an inner tube 17, in which the combustion flame is formed and in which combustible gas and air are passed through lines 18 and 19, respectively, for the desired combustion purposes. Off gases from the combustion pass from inner space 12 through duct 20.

Those skilled in the art will appreciate that various changes and modifications can be made in the details of the invention without departing form the scope of the invention as set forth in the appended claims. While a platinum catalyst will typically be employed in the reactor, palladium, ruthenium, nickel or other such known catalysts may be used to promote the desired reaction. It will also be understood that any suitable membrane assembly and module arrangement can be employed in the practice of the invention. A membrane system comprises a membrane module, or a number of such modules, arranged for either parallel or series operation. Membrane modules can be constructed in convenient hollow fiber form, or in spiral wound, pleated flat sheet or in any other desired configuration. Membrane modules are constructed to have a feed air surface side and a permeable gas exit side. For hollow fiber membranes, the feed air can be added either to the inside, i.e., the bore side, for so-called inside-out operation, or to the outer surface of the hollow fibers for an outside-in operation.

It will also be appreciated that the membrane material employed for the air separation membrane can be any suitable material capable of selectively permeating a more readily permeable component of feed air. Cellulose deviations, such as cellulose acetate, cellulose acetate butyrate and the like; polyamides and polyamides, including aryl polyamides and aryl polyamides; polysulfones; polystyrenes and the like, are representative of such materials. Composite membranes, such as, for example, ethyl cellulose deposited on a polysulfone substrate, are convenient for many air separation applications. In the use of composite membranes, those skilled in the art will appreciate that the material employed in the separation layer, which determines the separation characteristics of the composite, can be tailored to the particular performance requirements and operating conditions of a particular application. Asymmetric membranes composed of a single material, and in which a thin, dense skin layer determines the separation characteristics of the membrane, can likewise be used in the practice of the invention.

PSA systems employed in the practice of the invention will typically comprise one or a number of adsorbent beds operated in accordance with adsorption-desorption-repressurization processing cycles adapted to the number of beds employed, the applicable operating conditions, and the desired air separation performance requirements of a given application. The adsorbent material employed in each bed can be any suitable adsorbent material capable of selectively adsorbing a more readily adsorbable component of the feed air, while enabling the less readily adsorbable component of the feed air to be withdrawn from the bed. Zeolite molecular sieves are convenient adsorbent bed materials for the selective adsorption of nitrogen from feed air. Carbon molecular sieves, on the other hand, function in accordance with a different adsorption mechanism and, when used in air separation operations, result in the selective adsorption of oxygen as the more readily adsorbable component, with nitrogen being recovered as the less readily adsorbable component of feed air.

The invention offers desirable advantages in the art as compared with the membrane nitrogen/hydrogen deoxo system and the generator system described above. Thus, the practice of the invention enables flexibility in the composition of the desired atmosphere to be achieved. Depending on the requirements of the processing operation in which the desired atmosphere is to be used, the composition of the gas atmosphere can be conveniently changed. For example, using methane as the reducing compound, the carbon monoxide and hydrogen content can be changed from between 2.9% and 24% as indicated by the reactions below:

99.5% N₂ + 0.5O₂ + CH₄ → 99.5% N₂+ CO + 2H₂

95% N₂ + 5 O₂+ 10 CH₄ → 95% N₂ + 10 CO + 20 H₂

The residual oxygen in the partially purified nitrogen form the membrane (or PSA) unit is converted, in the practice of the invention, to useful compounds, leading to an increased gas volume starting form the same gas volume starting the same membrane (PSA) unit. This is an advantageous feature that, as those skilled in the art will appreciate, enhances the economic attractiveness of the invention. In addition, the invention, in comparison to a hydrogen deoxo unit, utilizes a hydrocarbon reducing compound that is less expensive than said hydrogen.

While membrane or PSA systems were described above as useful for producing partially purified nitrogen containing up to 3,000 ppm of oxygen, or higher, by air separation, it will be understood that a variety of other nitrogen streams containing residual amounts of oxygen can be used in the practice of the invention. Thus, a waste nitrogen stream containing small amounts of oxygen, e.g., 5% or more, or such nitrogen streams prepared by diluting very high purity nitrogen from a cryogenic air separation system with a suitable amount of oxygen, can be used to produce the desired nitrogen, carbon monoxide and hydrogen atmosphere suitable for use in the practice of the invention. In general, the oxygen content of the nitrogen stream processed as herein provided will be 10% or less, preferably 5% or less by volume, with the partially purified nitrogen obtained from membrane or PSA air separation units being generally advantageous for purposes of the invention.

As the membrane (PSA) nitrogen employed contains less oxygen than is present in conventional generators, wherein air is converted to a mixture of nitrogen, carbon monoxide and hydrogen upon reaction with a hydrocarbon, the reactor will be more user friendly than such conventional generators. Thus, there is a decreased change of soot formation at the very much lower oxygen content of the feed gas to the reactor employed in the practice of the invention.

It will also be noted that the installation of the oxygen conversion unit in the processing furnace itself serves to decrease the energy consumption of the process of the invention. For purposes of illustration, heat balance calculations of the conversion of residual oxygen were made based on a membrane nitrogen gas containing 3.2% oxygen, with the conversion to be carried out at 700°C and with the resulting nitrogen product to be used in a furnace at 700°C. With a flow of 100 Nm³/hr. of membrane nitrogen and using an external conversion unit, the amount of heat needed to heat the purified nitrogen and natural gas are as follows:
- Nitrogen :: 97 x 226.65 = 21,985 Kcal.
- Oxygen :: 3 x 240.13 = 720 Kcal.
- Natural Gas :: 6 x 387.39 = 2,329 Kcal.

The heat generated by the reactor at 700°C in the coarse of the reaction

6 CH₄ + 3 O₂ → 6CO + 12 H₂,

is -1,419 Kcal.

As the reacted gas is cooled down during transport to the furnace, it needs to be reheated in the furnace requiring the following amount of heat:
- Nitrogen :: 97 x 226.65 = 21,985 Kcal.
- Carbon Monoxide:: 16 x 229.82 = 1,379 Kcal.
- Hydrogen :: 12 x 219.69 = 2,636 Kcal.

Thus, the total amount of heat required for such conversion of residual oxygen in an external conversion unit is 49,615 Kcal. When the conversion unit is installed in the furnace in preferred embodiments of the invention, the reaction product atmosphere does not have to be reheated, and a savings of 26,000 Kcal., or 52.9%, can be achieved.

In the example above and assuming the following prices:
- Nitrogen :: 2.1 BF/Nm³
- Hydrogen :: 15 BF/Nm³
- Natural Gas :: 6.75 BF/Nm³,
the deoxo unit costs are as follows:
- Nitrogen :: 100 Nm³/hr. x 2.1 BF/M³ =
210BF/hr.
- Hydrogen :: 6 H₂ + 3 O₂ → 6 H₂O
6 m³/hr x 15 BF/m³ = 90 BF/hr.
- Total Production Cost :: = 300 BF/hr.
- Specific Cost :: 300/97 = 3.09 BF/m³

The costs for the conversion unit employed in the practice of the invention are as follows:
- Nitrogen :: 100 Nm³/hr. x 2.1 BF/m³ = 210 BF/hr.
- Hydrogen :: 6 CH₄ + 3 O₂ → 6 CO + 12 H₂
6 m³/hr. x 6.75 BF/m³ = 40.5 BF/hr.
- Total Production Cost :: = 250.5 BF/hr.
- Specific Cost :: 250.5/115 = 2.18 BF/m³

The conversion of oxygen in the practice of the invention thus provides a 29.5% cost decrease as compared to the conventional use of a deoxo unit.

The invention represents a highly desirable advance in the production of protective atmospheres. In overcoming the disadvantages associated with conventional deoxo units and with the production of protective atmospheres in conventional, maintenance intensive reactors, an atmosphere of nitrogen, carbon monoxide and hydrogen can be conveniently prepared in a convenient, non maintenance system, not requiring the use of hydrogen as a reactant and no subject to the undesirable flow decreases that are associated with conventional deoxo operations for the production of high purity nitrogen.

## Claims

1. A process for the production of a protective atmosphere for furnace operations comprising:
(a) reacting oxygen present in an oxygen-containing nitrogen stream with a hydrocarbon reactant in a catalytic reactor, the residual oxygen/hydrocarbon ratio in the catalytic reactor being such as to result in only the incomplete oxidation of the hydrocarbon to form carbon monoxide and hydrogen;
(b) recovering a protective atmosphere of nitrogen, carbon monoxide and hydrogen from the catalytic reactor, said protective atmosphere being obtained without undesired decrease gas flow, whereby a protective atmosphere is produced in a useful form, without the use of hydrogen as a reactant for residual oxygen, and without the undesired decrease in gas flow resulting from the reaction of hydrogen with residual oxygen to form water.

2. The process of Claim 1 in which the reaction of residual oxygen with hydrocarbon occurs in an externally heated catalytic reactor.

3. The process of Claim 1 in which the reaction of residual oxygen with hydrocarbon occurs in a catalytic reactor position within the furnace in which the protective atmosphere is used, the heat required for the reaction being supplied by said furnace.

4. The process of Claim 1 and including (1) passing feed air to a membrane or pressure swing adsorption system for separation therein; and (2) withdrawing a partially purified nitrogen stream containing said residual oxygen from the membrane or pressure swing adsorption system.

5. The process of Claim 4 which the amount of the partially purified nitrogen and of the hydrocarbon passed to the catalytic reactor are controlled to obtain the residual oxygen/hydrocarbon ratio necessary to achieve only the incomplete oxidation of the hydrocarbon to carbon monoxide and hydrogen.

6. The process of Claim 4 in which the hydrocarbon comprises methane, the oxygen/methane molecular ratio being 1/2.

7. The process of Claim 4 in which feed air is passed to a membrane system for the production of a partially purified nitrogen stream.

8. The process of Claim 4 in which feed air is passed to a pressure swing adsorption system for the production of a partially purified nitrogen stream.

9. The process of Claim 1 in which said protective atmosphere is passed to a zone of the furnace in which it is to be employed.

10. A system for the production of a protective atmosphere for furnace operations comprising:
(a) a catalytic reactor for the reaction of oxygen present in an oxygen-containing nitrogen stream with a hydrocarbon reactant;
(b) conduit means for passing the nitrogen stream to said catalytic reactor;
(c) conduit means for passing the hydrocarbon reactant to said catalytic reactor;
(d) conduit means for controlling the flow of the nitrogen stream and of the hydrocarbon reactant to the catalytic reactor so as to result in only the incomplete oxidation of the hydrocarbon to form carbon monoxide and hydrogen;
(e) means for supplying heat to said catalytic reactor; and
(f) conduit means for recovering a protective atmosphere of nitrogen, carbon monoxide and hydrogen from the catalytic reactor for use in said furnace operations,
whereby a protective atmosphere is produced in a useful form, without the use of hydrogen as a reactant for the oxygen, and without the undesired decrease in gas flow resulting from the reaction of hydrogen with said oxygen to form water and without the undesired soot formation that accompanies the reaction of a hydrocarbon with air.

11. The system of Claim 10 in which the catalytic reactor is an externally heated catalytic reactor.

12. The system of Claim 10 in which the catalytic reactor is positioned within the furnace in which the protective atmosphere is used, the heat required being supplied by said furnace.

13. The system of Claim 12 and including means for providing additional heat inside the catalytic reactor but out of direct contact with the space in which the catalytic reaction of residual oxygen with said hydrocarbon occurs.

14. The system of Claim 10 and including a membrane or pressure swing adsorption system for the production of a partially purified nitrogen stream for passage to said catalytic reactor, said partially purified nitrogen stream containing residual oxygen therein.

15. The system of Claim 14 in which the catalytic reactor is an externally heated catalytic reactor positioned within the furnace in which the protective atmosphere is used, the heat required being supplied by the furnace.

16. The system of Claim 15 and including means for providing additional heat inside the catalytic reactor but out of direct contact with the space in which the catalytic reaction of residual oxygen with said hydrocarbon occurs.

17. The system of Claim 14 and including means for controlling the amount of partially purified nitrogen and of the hydrocarbon passed to the catalytic reactor are controlled to obtain the residual oxygen/hydrocarbon ratio necessary to achieve only the incomplete oxidation of the hydrocarbon to carbon monoxide and hydrogen.

18. The system of Claim 14 in which the system for the production of a partially purified nitrogen stream comprises a membrane system.

19. The system of Claim 14 in which the system in the production of a partially purified nitrogen stream comprises a pressure swing adsorption system.

20. The system of Claim 12 in which the catalytic reactor is positioned at one or more positions in the furnace replacing radiant tubes in the heating zone of the furnace.
